# EUROPÄISCHE PATENTSCHRIFT

(11) **EP 0 433 471 B1**
(45) Veröffentlichungstag und Bekanntmachung des Hinweises auf die Patenterteilung: **10.11.1993**
(21) Anmeldenummer: 89123390.0
(22) Anmeldetag: 18.12.1989
(51) Int. Cl.: B60D 1/50, F16B 39/282, F16B 31/02

(54) **Anhängerkupplung Stichwort: Kupplungslagerung mit verrippter Druckscheibe**
Trailer coupling having coupling mount with pressure disc
Dispositif d'attelage avec support d'attelage ayant un disque de butée nervuré

(43) Veröffentlichungstag der Anmeldung: 26.06.1991
(73) Patentinhaber: ROCKINGER Spezialfabrik für Anhängerkupplungen GmbH & Co., D-80904 München (DE)
(72) Erfinder: Glässner, Ralf, D-8000 München 50 (DE)
(74) Vertreter: Weickmann, Heinrich, Dipl.-Ing.

(56) Entgegenhaltungen:
- EP-A- 0 000 325
- DE-U- 8 009 652
- GB-A- 2 015 679
- US-A- 4 006 661

## Beschreibung

Die Erfindung betrifft eine Anhängerkupplung für ein Kraftfahrzeug, bei der
ein Kupplungskörper mit einer Zugstange vereinigt ist,
diese Zugstange in einer Bohrung eines Zugstangenlagers aufgenommen ist,
die Zugstange mit dem Zugstangenlager ggf. unter Einschaltung mindestens eines elastischen Druckringes axial verspannt ist, und zwar dadurch,
daß sich ein kupplungskörperseitiges Ende des Zugstangenlagers gegen eine Stützfläche des Kupplungskörpers axial abstützt,
daß eine Spannmutter auf einen kupplungskörperfernen Gewindeendabschnitt der Zugstange aufgeschraubt und gesichert ist,
daß diese Spannmutter eine Druckscheibe mit einem zum Kupplungskörper hin erweiterten Innenkonus gegen einen komplementären Außenkonus der Zugstange preßt und
daß diese Druckscheibe axial auf das kupplungskörperferne Ende des Zugstangenlagers einwirkt,
wobei das Zugstangenlager an einem Träger des jeweiligen Kraftfahrzeuges befestigt oder zur Befestigung an diesem Träger ausgebildet ist.

Bei herkömmlichen Anhängerkupplungen dieser Art (siehe z.B. EP-A-000 325) wird die Zugstange in dem Zugstangenlager im wesentlichen dadurch gehalten, daß eine auf der Zugstange angebrachte Kronenmutter die Druckscheibe auf einem konischen Absatz der Zugstange verspannt. Die elastischen Druckringe in Form von Gummifedern erhalten ihre Vorspannung dadurch, daß bei fest angezogener Kronenmutter und verspannter Druckscheibe zwischen der zum Kupplungskörper weisenden Fläche der Druckscheibe und einem Anlagebund des Kupplungskörpers an der Gummifeder ein definiertes Maß eingestellt wird, welches so bemessen ist, daß die Gummifedern um ein bestimmtes Maß komprimiert werden.

Von der durch die Kronenmutter erzeugten horizontalen Vorspannkraft geht nur ein sehr geringer Teil in die Vorspannung der Gummifedern, während der hauptsächliche Teil zur Verspannung der aus der Kronenmutter, der Druckscheibe und der Zugstange bestehenden Schraubverbindung dient.

Beim Anziehen der Schraubverbindung muß die Kronenmutter auf ein gewisses Mindestanzugsdrehmoment (zum Beispiel 500 Nm) angezogen werden. Anschließend muß die Kronenmutter weiter angezogen werden, bis sich die nächste Überdeckung einer der am Ende der Zugstange angebrachten Splintlochbohrungen mit einer Nut in der Krone der Kronenmutter ergibt. Da die Schraubverbindung sehr steif ist (geringe Dehnlänge), steigt das erforderliche Drehmoment ungünstigenfalls stark an (zum Beispiel auf 1.000 bis 1.200 Nm). Obwohl es wünschenswert wäre, das Mindestdrehmoment höher als die genannten 500 Nm zu wählen, ist dies hauptsächlich deshalb nicht möglich, weil beim weiteren Anziehen der Schraubverbindung zur Sicherung mit dem Splint mit einer erheblichen Erhöhung des Momentes gerechnet werden muß, wobei diese weder die zulässige Schraubenbelastung noch das von Hand mit einem Drehmomentschlüssel aufzubringende Drehmoment übersteigen darf.

Es wäre also wünschenswert, eine einfache Sicherung zu finden, die das weitere Anziehen der Schraubverbindung nach Erreichen eines optimalen Anzugsdrehmoments überflüssig machen würde.

Der Erfindung liegt die Aufgabe zugrunde, eine Anhängerkupplung gattungsgemäßer Art so mit einfachen Mitteln auszugestalten, daß nach Erreichen des optimalen Anzugsdrehmoments für die Spannmutter ein weiteres Anziehen der Spannmutter im Hinblick auf die Verdrehsicherung nicht notwendig ist.

Zur Lösung dieser Aufgabe wird erfindungsgemäß vorgeschlagen, daß die Druckscheibe und die Spannmutter dadurch auf der Zugstange gegen Verdrehung gesichert sind, daß an dem Innenkonus der Druckscheibe eine Verrippung zum Eingriff mit dem Aussenkonus der Zugstange angebracht ist und daß an einer der Spannmutter zugekehrten Anlagefläche eine weitere Verrippung angebracht ist.

Wegen näherer Einzelheiten der Sicherung durch Verrippung wird auf eine Firmendruckschrift der Firma Bauer & Schaurte Karcher GmbH mit dem Titel "Neue Sicherheit für Konstruktionen" und dem Untertitel "Verriegelungsrippen an Sicherungs-Schrauben und -Muttern" verwiesen. Diese Veröffentlichung stammt von Dipl.Ing. (FH) Josef Esser und ist erschienen als Sonderdruck aus techno-tip, Nr. 6/1986, in dem Ingenieur Dienst der oben genannten Firma, Ausgabe Nr. 34, August 1986.

Im Hinblick auf optimale Sicherung und minimale Beschädigung der aneinander anliegenden Flächenbereiche ist vorgesehen, daß die Rippen der jeweiligen Verrippung in Ebenen liegen, welche die Achse der Zugstange enthalten.

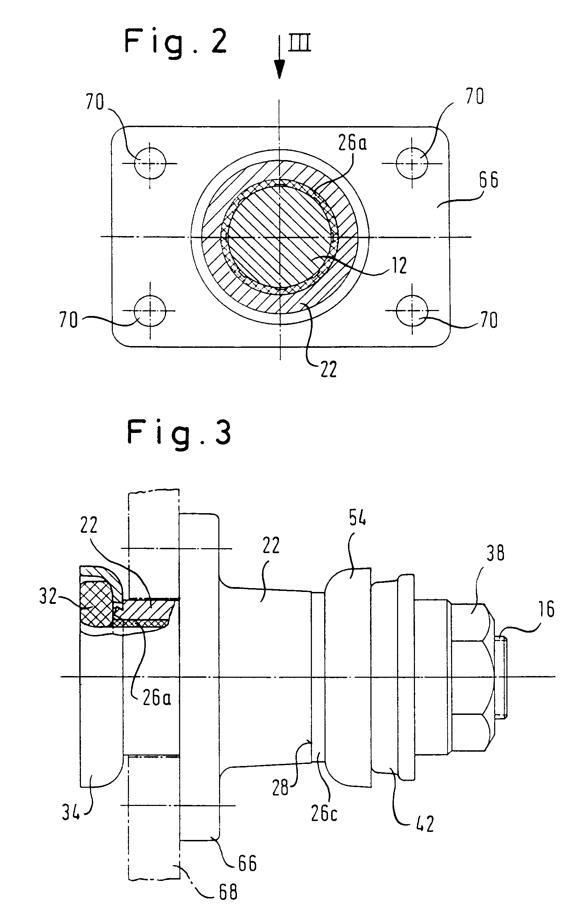

Wiederum im Hinblick auf schonende Behandlung der im Verrippungsbereich aneinander anliegenden Flächen wird empfohlen, daß die Rippen der jeweiligen Verrippung in einer zu ihrer Längserstreckung senkrechten Schnittebene betrachtet jeweils teilkreisförmig oder teilwellenförmig gerundet sind. Im einzelnen wird bezüglich der Rippenform und der Werkstoffwahl auf die oben genannte und beigefügte Arbeit von Esser verwiesen. Es sei aber an dieser Stelle erwähnt, daß die Aufgabe der Erfindung grundsätzlich auch mit Rippen in Form von Verriegelungszähnen gelöst werden kann, wie sie in der Arbeit von Esser in Abbildung 2a dargestellt sind.

Man kann dann die Verrippungen an der Druckscheibe gleichzeitig anbringen, insbesondere im Kaltpressverfahren. Da man die Druckscheibe ohnehin im Hinblick auf die Erzielung reproduzierbarer Vorspannungsverhältnisse kalibrieren muß, empfiehlt es sich, daß man zur Herstellungsvereinfachung die Verrippungen im Zuge einer Kalibrierung der Druckscheibe anbringt.

Die beiliegenden Figuren erläutern die Erfindung anhand eines Ausführungsbeispiels. Es stellen dar:
- Figur 1: eine Seitenansicht einer Anhängerkupplung mit einem Längsschnitt durch die Zugstangenlagerung;
- Figur 2: einen Schnitt nach Linie II - II der Figur 1;
- Figur 3: eine Draufsicht zu Figur 2 in Pfeilrichtung III der Figur 2;
- Figur 4: einen achsenthaltenden Schnitt durch eine Druckscheibe;
- Figur 5: eine Ansicht auf die Druckscheibe in Pfeilrichtung V der Figur 4;
- Figur 6: eine Ansicht auf die Druckscheibe in Pfeilrichtung VI der Figur 4;
- Figur 7: einen Schnitt nach Linie VII - VII der Figur 4, dieser Schnitt hinsichtlich des Verriegelungsprofils gleichzeitig entsprechend dem Schnitt VIII - VIII der Figur 5.

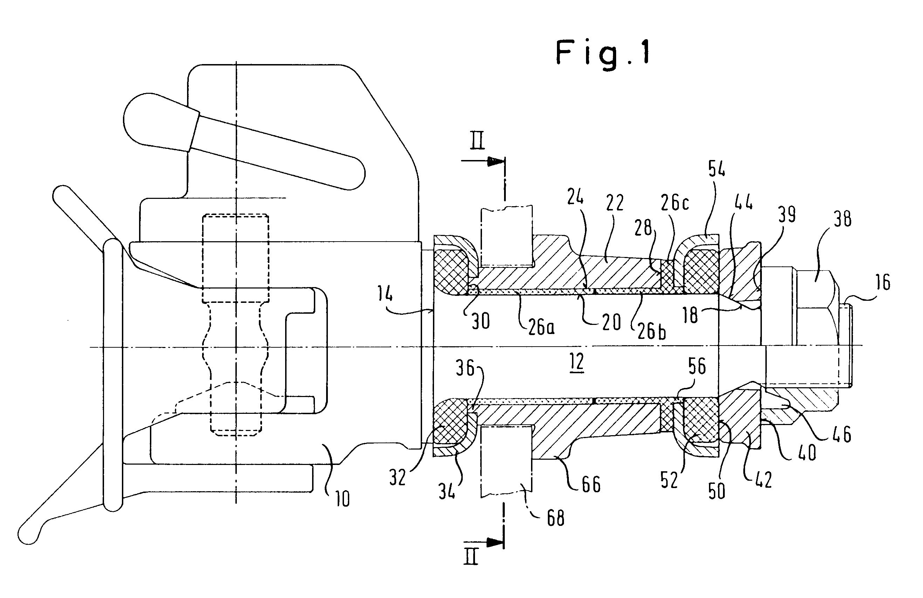

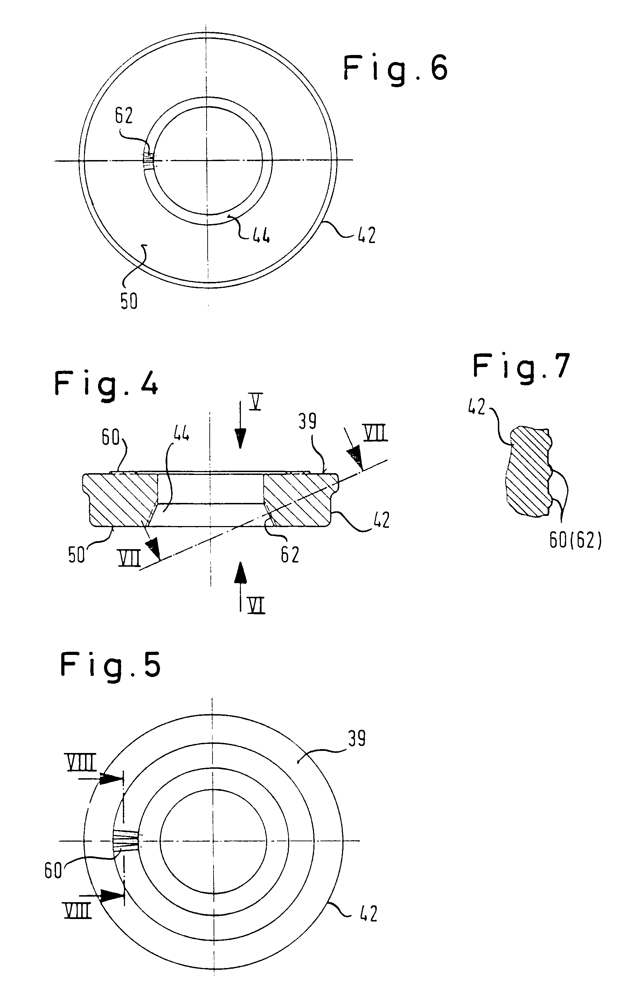

In Figur 1 ist ein Kupplungskörper mit 10 bezeichnet. An diesen Kupplungskörper 10 schließt sich einstückig eine Zugstange 12 an. Im Übergang zwischen dem Kupplungskörper 10 und der Zugstange 12 ist eine Stützfläche 14 ausgebildet. Am kupplungskörperfernen Ende der Zugstange 12 ist ein Gewindeabschnitt 16 ausgebildet, an den sich zum Kupplungskörper 10 hin ein Außenkonus 18 anschließt; dieser Außenkonus 18 geht in einen zylindrischen Abschnitt 20 der Zugstange 12 über. Die Zugstange 12 ist von einem Zugstangenlager 22 in dessen zylindrischer Innenbohrung 24 aufgenommen. Dabei ist zwischen der Innenbohrung 24 und der Zugstange 12 ein zweiteiliges Futter 26a, 26b aufgenommen. Der Futterteil 26b besitzt dabei einen Radialflansch 26c, der an einer Endfläche 28 des Zugstangenlagers 22 anliegt. Zwischen der Stützfläche 14 des Kupplungskörpers 10 und einer kupplungskörperseitigen Endfläche 30 des Zugstangenlagers 22 ist eine Gummifeder 32 eingesetzt, die durch einen Federteller 34 gestützt ist. Der Federteller 34 sitzt auf einen Zentrierbund 36 des Zugstangenlagers 22. Auf den Gewindeabschnitt 16 ist eine Spannmutter 38 aufgeschraubt. Diese Spannmutter 38 wirkt mit einer Anlagefläche 40 gegen eine Anlagefläche 39 einer Druckscheibe 42. Die Druckscheibe 42 weist einen Innenkonus 44 auf, der durch die Spannmutter 42 gegen den Außenkonus 18 mit Vorpannung angepreßt ist. Zur Vergrößerung der Elastizität und damit der Vorspannbarkeit ist die Spannmutter 38 mit einer Ringnut 46 ausgeführt. An der Anlagefläche 50 der Druckscheibe 42 liegt eine Gummifeder 52 an. Diese Gummifeder 52 ist durch einen Federteller 54 gestützt, welcher auf einem Zentrierbund 56 des Futterteils 26b zentriert ist. Die Gummifedern 32 und 52 sind zusammen mit ihren Federtellerns 34 und 54 und mit dem Zugstangenlager 22 zwischen die Stützfläche 14 des Kupplungskörpers und die Anlagefläche 50 der Druckscheibe 42 unter Vorspannung eingespannt. Dabei liegt nur ein kleiner Teil der durch die Spannmutter 38 insgesamt aufgebrachten Kraft in der Teilefolge 32, 34, 22, 26c, 52, 54. Der größte Teil der aufgebrachten Spannung ist zwischen dem Außenkonus 18 und der Spannmutter 38 wirksam. An der Anlagefläche 39 der Druckscheibe 42 ist eine erste Verrippung 60 angebracht, deren Profil aus figur 7 zu ersehen ist. Eine zweite Verrippung 62 ist an dem Innenkonus 18 angebracht, deren Profil ebenfalls der Figur 7 entspricht.

Durch die Verrippungen 60,62 der Druckscheibe 42 wird ein Festsitz sowohl auf dem Außenkonus 18 der Zugstange 12 als auch auf der Anlagefläche 39 der Mutter 38 erreicht. Somit ist die Mutter 38 auch gegen Verdrehung relativ zur Zugstange 12 gesichert. Bei dieser Schraubensicherung ist ein weiteres Anziehen nach Erreichen des optimalen Drehmoments nicht erforderlich, so daß das optimale Drehmoment tatsächlich eingestellt werden kann. Dadurch ergibt sich auch im schlechtesten Fall eine erheblich höhere Vorspannkraft und damit eine bessere Sicherung der Druckscheibe 42 gegen Abheben vom Außenkonus der Zugstange 12.

Es ergeben sich erhebliche Kosteneinsparungen durch Wegfall von Splintbohrungen am Ende der Zugstange, durch Wegfall des Splintes und durch Materialeinsparungen an der Zugstange. Da bisher schon die Druckscheibe nach dem Schmieden kalibriert wurde und nun die Verrippung ebenfalls beim Vorgang der Kalibrierung aufgebracht werden kann, ergeben sich andererseits keinerlei Mehrkosten.

Ein weiterer Vorteil entsteht noch bei der Montage dadurch, daß das zeitaufwendige Einsetzen des Splintes entfällt.

Besonders bedeutsam ist, daß bei einer Zugbelastung an der Zugstange 12 ein Abheben der Druckscheibe 42 von dem Außenkonus 18 verhindert ist und daß zwischen diesen Teilen stets auch unter Zugbelastungen eine gewisse Restklemmkraft besteht im Hinblick auf Dreheinwirkungen, die gleichzeitig mit der Zugwirkung auftreten können.

Das Zugstangenlager 22 ist mit einem Befestigungsflansch 66 versehen, der mit einem Träger, d. h. mit einer Traverse 68, durch Schrauben verschraubt ist, welche Bohrungen 70 des Flansches 66 durchsetzen.

## Patentansprüche

1. Anhängerkupplung für ein Kraftfahrzeug, bei der
ein Kupplungskörper (10) mit einer Zugstange (12) vereinigt ist,
diese Zugstange (12) in einer Bohrung (24) eines Zugstangenlagers (22) aufgenommen ist,
die Zugstange (12) mit dem Zugstangenlager (22) ggf. unter Einschaltung mindestens eines elastischen Druckringes (32, 52) axial verspannt ist, und zwar dadurch,
daß sich ein kupplungskörperseitiges Ende des Zugstangenlagers (22) gegen eine Stützfläche (14) des Kupplungskörpers (10) axial abstützt,
daß eine Spannmutter (38) auf einen kupplungskörperfernen Gewindeendabschnitt (16) der Zugstange (12) aufgeschraubt und gesichert ist,
daß diese Spannmutter (38) eine Druckscheibe (42) mit einem zum Kupplungskörper (10) hin erweiterten Innenkonus (44) gegen einen komplementären Außenkonus (18) der Zugstange (12) preßt und
daß diese Druckscheibe (42) axial auf das kupplungskörperferne Ende des Zugstangenlagers (22) einwirkt,
wobei das Zugstangenlager (22) an einem Träger (68) des jeweiligen Kraftfahrzeuges befestigt oder zur Befestigung an diesem Träger (68) ausgebildet ist,
**dadurch gekennzeichnet,**
daß die Druckscheibe (42) und die Spannmutter (38) dadurch auf der Zugstange (12) gegen Verdrehung gesichert sind, daß an dem Innenkonus (44) der Druckscheibe (42) eine Verrippung (62) zum Eingriff mit dem Aussenkonus (18) der Zugstange (12) angebracht ist und daß an einer der Spannmutter (38) zugekehrten Anlagefläche (39) eine weitere Verrippung (60) angebracht ist.

2. Anhängerkupplung nach Anspruch 1,
**dadurch gekennzeichnet,**
daß die Rippen wenigstens einer Verrippung (60,62) in Ebenen liegen, welche die Achse der Zugstange enthalten.

3. Anhängerkupplung nach einem der Ansprüche 1 und 2,
**dadurch gekennzeichnet,**
daß die Rippen wenigstens einer Verrippung (60,62) in einer zur jeweiligen Längserstreckung der Rippen senkrechten Schnittebene betrachtet jeweils teilkreisförmig oder teilwellenförmig gerundet sind.

4. Verfahren zur Herstellung einer Druckscheibe für eine Anhängerkupplung nach einem der Ansprüche 1 bis 3,
**dadurch gekennzeichnet,**
daß man die Verrippungen (60,62) gleichzeitig anbringt, insbesondere im Kaltpreßverfahren.

5. Verfahren nach Anspruch 4,
**dadurch gekennzeichnet,**
daß man die Verrippungen (60,62) im Zuge einer Kalibrierung der Druckscheibe (42) anbringt.

## Claims

1. Trailer coupling for a motor vehicle, in which a coupling body (10) is combined with a drawbar (12), this drawbar (12) is received in a bore (24) of a drawbar bearing (22), the drawbar (12) is clamped axially to the drawbar bearing (22) possibly with the interposition of at least one resilient pressure ring (32, 52) and indeed due to the fact that one end of the drawbar bearing (22) adjacent the coupling body is supported axially against a support surface (14) of the coupling body (10), that a clamping nut (38) is screwed onto a threaded section (16) of the drawbar (12) remote from the coupling body and is tightened, that this clamping nut (38) presses a thrust washer (42) with an inner cone (44) widening out towards the coupling body (10), against a complementary outer cone (18) of the drawbar (12) and that this thrust washer (42) acts axially on the end of the drawbar bearing (22) remote from the coupling body, the drawbar bearing (22) being attached to a support (68) of the respective motor vehicle or being constructed for attachment to this support (68), characterised in that the thrust washer (42) and the clamping nut (38) are prevented from rotating on the drawbar (12) due to the fact that provided on the inner cone (44) of the thrust washer (42) is a set of ribs (62) for engagement with the outer cone (18) of the drawbar (12) and that a further set of ribs (60) is provided on a contact surface (39) facing the clamping nut (38).

2. Trailer coupling according to Claim 1, characterised in that the ribs of at least one set of ribs (60, 62) lie in planes which contain the axis of the drawbar.

3. Trailer coupling according to one of Claims 1 and 2, characterised in that the ribs of at least one set of ribbing (60, 62) are respectively rounded in the shape of a semicircle or are partly undulating in a sectional plane perpendicular to the respective longitudinal extent of the ribs.

4. Method for producing a thrust washer for a trailer coupling according to one of Claims 1 to 3, characterised in that the sets of ribbing (60, 62) are applied simultaneously, in particular by the cold pressing method.

5. Method according to Claim 4, characterised in that the sets of ribs (60, 62) are applied in the course of a calibration of the thrust washer (42).

## Revendications

1. Dispositif d'attelage de remorque pour un véhicule à moteur, dans lequel
un corps de dispositif d'attelage (10) est réuni à une barre de traction (12),
cette barre de traction (12) est logée dans un trou (24) d'un palier de barre de traction (22),
la barre de traction (12) est contrainte dans le sens axial avec le palier de barre de traction (22), le cas échéant en utilisant au moins un anneau de pression élastique (32, 52), et ce, par le fait
qu'une extrémité, du palier de barre de traction (22), du côté du corps de dispositif d'attelage, prend appui dans le sens axial sur une surface d'appui (14) du corps de dispositif d'attelage (10),
qu'un écrou de serrage (38) est vissé et bloqué sur un segment d'extrémité filetée (16) de la barre de traction (12), éloigné du corps de dispositif d'attelage,
que cet écrou de serrage (38) presse une rondelle de pression (42) avec un cône intérieur (44), élargi dans la direction du corps de dispositif d'attelage (10), contre un cône extérieur (18) complémentaire de la barre de traction (12), et
que cette rondelle de pression (42) agit, dans le sens axial, sur l'extrémité du palier de barre de traction (22) éloignée du corps de dispositif d'attelage,
le palier de barre de traction (22) étant fixé sur un support (68) du véhicule à moteur considéré ou étant formé pour être fixé sur ce support (68),
caractérisé en ce que,
que la rondelle de pression (42) et l'écrou de serrage (38) sont bloqués sans torsion possible sur la barre de traction (12) par le fait qu'un nervurage (62) est réalisé sur le cône intérieur (44) de la rondelle de pression (42), pour venir en prise avec le cône extérieur (18) de la barre de traction (12), et qu'un autre nervurage (60) est réalisé sur une surface d'appui (39) orientée vers l'écrou de serrage (38).

2. Dispositif d'attelage de remorque selon la revendication 1,
caractérisé en ce que,
que les nervures d'au moins un nervurage (60, 62) sont situées dans des plans qui comprennent l'axe de la barre de traction.

3. Dispositif d'attelage de remorque selon l'une quelconque des revendications 1 et 2,
caractérisé en ce que,
que les nervures d'au moins un nervurage (60, 62), observées dans un plan de coupe perpendiculaire à leur extension longitudinale, sont arrondies en forme d'une partie de cercle ou en forme d'une partie d'ondulation.

4. Procédé pour la fabrication d'une rondelle de pression pour un dispositif d'attelage de remorque selon l'une quelconque des revendications 1 à 3,
caractérisé en ce que,
les nervurages (60, 62) sont réalisés simultanément sur la rondelle de pression, particulièrement selon un procédé de compression à froid.

5. Procédé selon la revendication 4,
caractérisé en ce que,
les nervurages (60, 62) sont réalisés durant une opération de calibrage de la rondelle de pression (42).
